# EUROPÄISCHE PATENTSCHRIFT

(11) **EP 3 366 613 B1**
(45) Veröffentlichungstag und Bekanntmachung des Hinweises auf die Patenterteilung: **27.10.2021**
(21) Anmeldenummer: 18154215.0
(22) Anmeldetag: 30.01.2018
(51) Int. Cl.: G01G 11/04, B65G 17/12, G01L 5/00

(54) **ELEVATOR-DREHMOMENTWAAGE ZUR ERFASSUNG BEWEGTER FÖRDERMENGEN UND VERFAHREN ZUM FÖRDERN VON GUT**
ELEVATOR TORQUE BALANCE FOR DETECTING MOVED VOLUMES AND METHOD FOR CONVEYING OF GOODS
BALANCE DE COUPLE D'ASCENSEUR POUR DÉTECTER LES QUANTITÉS TRANSPORTÉES ET PROCÉDÉ DE TRANSPORT DE PRODUITS

(30) Priorität: 01.02.2017 DE 102017101972; 10.05.2017 DE 102017110072; 06.10.2017 DE 102017217849
(43) Veröffentlichungstag der Anmeldung: 29.08.2018
(73) Patentinhaber: Skandia Elevator AB, 534 94 Vara (SE)
(72) Erfinder: FISCHER, Max, 84381 Johanniskirchen (DE)
(74) Vertreter: Zacco GmbH

(56) Entgegenhaltungen:
- EP-A1- 0 857 952
- DE-A1- 3 137 291
- DE-B- 1 101 783
- US-A- 5 685 772
- Edwin Becker ET AL: "Torque monitoring - The secret weapon", World Cement, March 2014, 1. März 2014 (2014-03-01), Seiten 53-56, XP055486738, Gefunden im Internet: URL:https://www.pruftechnik.com/it/top/sta mpa/editorials/torque-monitoring.html [gefunden am 2018-06-21]
- Interface Inc. Load Cells & Torque Sensors: "Torque 101 Webinar Recording", , 23 October 2014 (2014-10-23), pages 1-2, XP054980594, Retrieved from the Internet: URL:https://www.youtube.com/watch?v=P4ZHbk Ea-6s [retrieved on 2020-06-19]

## Beschreibung

Die vorliegende Erfindung betrifft einen Elevator zum Fördern von Gut mit den Merkmalen des unabhängigen Anspruchs 1 sowie ein Verfahren zum Fördern von Gut mit den Merkmalen des unabhängigen Verfahrensanspruchs 11.

Von einem Elevator kann bei Förderanlagen gesprochen werden, die mittels endlos umlaufender Zugmittel und daran verankerter Förderbehälter Schüttgut o. dgl. schräg oder vertikal nach oben bewegen. Ein solcher Elevator umfasst in der Regel ein schräg oder vertikal angeordnetes Fördermittel bzw. Zugmittel wie bspw. ein endlos umlaufendes Band, welches von einer Antriebseinheit umlaufend bewegt wird. Am Fördermittel oder Zugmittel ist eine Vielzahl von Aufnahmeeinheiten in Form von Bechern oder Schaufeln verankert, welche üblicherweise jeweils in gleichen Abständen zueinander angeordnet sind. In einem unteren Bereich des Elevators bzw. einem Aufnahme oder Zuführbereich kann eine Zuführeinrichtung vorgesehen sein, mittels welcher die Aufnahmeeinheiten jeweils nacheinander mit Gut bzw. Schüttgut befüllbar sind. Das Gut oder Schüttgut kann an eine Abführeinrichtung abgegeben werden, welche Abführeinrichtung im oberen Bereich des Elevators vorgesehen ist. Ein wichtiger Parameter beim Betreiben eines Elevators ist die Information, wie viel Masse an Gut über eine bestimmte Zeit bzw. über die gesamte Förderdauer befördert wird oder wurde.

Durch die DE 31 37 291 A1 ist eine Einrichtung zur Messung der Förderleistung eines Elevators offenbart. Hierzu ist unter anderem unter dem Stützlager einer oberen Umlenkrolle ein Kraftmesselement angeordnet, so dass das Nettogewicht des Elevators erfassbar ist und daraus ein Signal erzeugt werden kann. Zudem ist eine Einrichtung zur Messung der Geschwindigkeit des Elevators vorgesehen. Die Förderleistung kann auf Grundlage der Signale bezüglich des Nettogewichts und der Geschwindigkeit des Elevators bestimmt werden.

Die Bestimmung der Fördermenge über das Drehmoment ist weiterhin durch die DE 1101 783 B offenbart, wobei das auf ein Fächerrad ausgeübte Drehmoment mittelbar oder unmittelbar gemessen wird. Darüber hinaus kann ein weiteres Messgerät vorgesehen sein, welches aus der Anzahl der pro Zeiteinheit gelieferten Stromimpulse die Drehzahl des Fächerrades und damit die durchgesetzte Menge an Schüttgut ermittelt.

US 5,685,772 offenbart eine Vorrichtung zum Messen des Volumens und des Gewichts von geerntetem Getreide während des Erntens mit einem Elevator gemäß dem Oberbegriff des Anspruchs 1.

EP 0 857 952 A1 beschreibt ein Laufraddrehmomentmessgerät. Die Massenflussrate kann gemäß dem Coriolismessprinzip gemessen werden. Ein Drehmomentmessgerät misst das von einem Motor ausgeübte Drehmoment.

Im Stand der Technik ist weiterhin bekannt, die Fördermenge eines Elevators durch Erfassung einer Stromaufnahme für dessen elektrischen Antriebsmotor zu ermitteln.

Die bekannten Lösungen haben sich in jeweils unterschiedlicher Hinsicht als nachteilig erwiesen, da der Aufbau und die Vorgehensweise zur Bestimmung der Fördermenge teilweise zu komplex waren, was sich folglich in einer ungenauen und fehlerhaften Bestimmung der Fördermenge widerspiegelt.

Der Erfindung liegt die Aufgabe zugrunde, einen Elevator zum Fördern von Gut sowie ein Verfahren zum Fördern von Gut zur Verfügung zu stellen, mittels welchen über einen bestimmten Zeitabschnitt bewegte Massen an Gut einfach abgeleitet und präzise bestimmt werden können.

Diese Aufgaben werden durch einen Elevator und ein Verfahren zum Fördern von Gut mit den Merkmalen in den unabhängigen Ansprüchen gelöst. Weitere vorteilhafte Ausgestaltungen und Weiterbildungen der Erfindung sind in den jeweils abhängigen Ansprüchen angegeben.

Der erfindungsgemäße Elevator zum Fördern von Gut umfasst mindestens ein umlaufend geführtes Zugmittel, das bspw. durch ein Band, ein Gurtband, eine Förderkette, einen Riemen o. dgl. endlos umlaufendes Zugmittel gebildet sein kann. Das mindestens eine umlaufend geführte Zugmittel kann um zumindest zwei Umlenkstationen - typischerweise eine untere und eine obere Umlenkung bzw. Umlenkstation - geführt sein. Die zumindest zwei Umlenkstationen können durch Rollen oder durch Achsen, Kettenräder oder dergleichen rotierende Umlenkungen gebildet sein. Wie erwähnt, kann das mindestens eine umlaufend geführte Zugmittel bspw. durch ein Förderband oder durch eine Förderkette oder dergleichen gebildet sein.

Der erfindungsgemäße Elevator umfasst weiter wenigstens einen Antrieb, über welchen das Zugmittel umlaufend bewegt werden kann. Der wenigstens eine Antrieb kann durch einen Motor wie bspw. einen Elektromotor, einen hydraulischen Motor oder einen anderweitig angetriebenen Motor gebildet sein. Vorzugsweise kann der wenigstens eine Antrieb einer der zumindest zwei Umlenkstationen zugeordnet sein, so dass eine Umlenkstation der zumindest zwei Umlenkstationen als Antrieb fungieren kann bzw. so dass eine Umlenkstation der zumindest zwei Umlenkstationen über den wenigstens einen Antrieb rotierend bewegt wird. In einer sinnvollen Konfiguration ist bspw. eine untere Umlenkrolle drehfest mit einer Abtriebswelle eines elektrischen Antriebsmotors verbunden, so dass dieser Antriebsmotor einen Direktantrieb für eine Umlenkrolle des Riemen- oder Kettentriebes des Elevators bildet.

Der erfindungsgemäße Elevator umfasst weiter eine Vielzahl an Aufnahmeeinheiten für Schüttgut, granulatartiges Gut oder sonstiges Fördergut, welche Aufnahmeeinheiten zum Bewegen von Gut mechanisch an das mindestens eine umlaufend angetriebene Zugmittel gekoppelt bzw. dort verankert sind. Die Vielzahl an Aufnahmeeinheiten können durch Becher, Schaufeln oder Träger oder dergleichen ausgebildet sein, welche zumindest näherungsweise gleichmäßig entlang des Umfangverlaufes des mindestens einen Zugmittels zueinander beanstandet angeordnet sein können. Die Abstände der Aufnahmeeinheiten oder Becher sind typischerweise jeweils gleich, so dass bei ungefähr gleichmäßiger Befüllung der Becher oder Aufnahmeeinheiten mit Fördergut oder Schüttgut auch eine gleichmäßige Antriebsleistung vonnöten ist.

Der erfindungsgemäße Elevator weist weiterhin eine Steuerungseinheit auf, die mit mindestens einer Sensorik in Verbindung steht, wobei die Steuerungseinheit über die mindestens eine Sensorik zum Erfassen und/oder Erkennen eines auf eine Antriebswelle des wenigstens einen Antriebs über den Zeitverlauf wirkenden Drehmoments ausgebildet und ausgestattet ist, und wobei die Steuerungseinheit aus dem erfassten und/oder erkannten Drehmoment, das über den Zeitverlauf auf die Antriebswelle wirkt, aussagekräftige Informationen zu mittels der Vielzahl an Aufnahmeeinheiten über einen bestimmten Zeitabschnitt bewegten Massen an Gut ableiten kann. Mit dem Elevator, der den erfindungsgemäßen Gegenstand bildet, können somit Informationen bereitgestellt werden, wie viele Massen an Gut je Aufnahmeeinheit und/oder je Förderperiode bewegt wurden. Dies erfordert die ständige Erfassung der anliegenden Drehmomente und deren Speicherung über definierte Betriebsperioden des Elevators, so dass aus diesen Werten exakt die vom Elevator geförderten Mengen bzw. Massen an gefördertem Gut oder Schüttgut hergeleitet und abgespeichert werden können.

Das Ableiten von Informationen zu mittels der Vielzahl an Aufnahmeeinheiten über einen bestimmten Zeitabschnitt bewegten Massen an Gut kann eine sehr geringe Fehlertoleranz von bspw. nur 0,5% (oder auch weniger, je nach Genauigkeit der Messungen und der verwendeten Sensorik) betragen. Damit kann die Messgenauigkeit hinsichtlich der beförderten Masse an Gut über einen bestimmten Zeitabschnitt bspw. bei Werten von 99,5% oder höher liegen. Mögliche Toleranzen, die bei diesen Messungen auftreten können, können bspw. durch Reibungsverluste und/oder Schöpfverluste und/oder durch den Luftwiderstand oder dergleichen verursacht sein.

Das auf die Antriebswelle wirkende Drehmoment kann anhand einer auf die Antriebswelle wirkenden Gewichtskraft abgeleitet werden, welche Gewichtskraft von der mindestens einen Sensorik erfasst und/oder erkannt wird. Die auf die Antriebswelle wirkende Gewichtskraft kann je nach Anzahl der befüllten Aufnahmeeinheiten mit Gut und je nach Grad der Befüllung der Aufnahmeeinheiten mit Gut unterschiedlich ausgeprägt sein bzw. unterschiedliche Werte annehmen. Auf diese Weise kann die auf die Antriebswelle wirkende Gewichtskraft jeweils schwanken und/oder unterschiedlich ausgeprägt sein.

Es kann weiterhin vorgesehen sein, dass das Drehmoment in Abhängigkeit der auf die Antriebswelle wirkenden Gewichtkraft einstellbar ist, wobei das Drehmoment bei einer auf die Antriebswelle wirkenden Gewichtskraft mit einem hohen Wert entsprechend größer ausgebildet sein kann, als bei einer auf die Antriebswelle wirkenden Gewichtskraft mit einem geringeren Wert, um die erforderliche Fördergeschwindigkeit und die Förderleistung beibehalten zu können.

Die Steuerungseinheit kann als Computer und/oder als Rechnereinheit ausgebildet sein, welche anhand des erfassten und/oder erkannten Drehmoments Informationen zu mittels der Vielzahl an Aufnahmeeinheiten über einen bestimmten Zeitabschnitt bewegten Massen an Gut ableiten kann. Das kann bedeuten, dass anhand der Informationen die Fördermenge an Gut bzw. der Durchsatz an befördertem Gut abgeleitet und bestimmt werden kann.

Es kann vorgesehen sein, dass in einem unteren Bereich des umlaufend geführten Zugmittels wenigstens eine Zuführeinrichtung vorgesehen ist, mittels welcher wenigstens einen Zuführeinrichtung das Gut jeweils an die Aufnahmeeinheiten zugeführt werden kann und von diesen aufgenommen werden kann, welche in Förderrichtung des umlaufend geführten Fördermittels bzw. Zugmittels vertikal nach oben bewegt werden. Die wenigstens eine Zuführeinrichtung kann als Rohr und/oder als Leitung und/oder dergleichen ausgebildet sein. Auch kann die Zuführeinrichtung bspw. als Band- oder Kettenförderer o. dgl. ausgebildet sein, mit dessen Hilfe das zu fördernde Schüttgut zum Elevator befördert und vorzugsweise in dessen Aufnahmeeinrichtungen hineinbefördert wird.

Der Elevator als erfindungsgemäßer Gegenstand kann weiterhin gemäß einer weiteren Ausführungsvariante wenigstens eine Abführ- oder Abfördereinrichtung aufweisen, welche vorzugsweise im oberen Bereich des umlaufend geführten Fördermittels angeordnet ist, und zwar derart, dass durch eine mit dem umlaufend geführten Fördermittel bedingte Kippbewegung das Gut aus den Aufnahmeeinheiten an die wenigstens eine Abführeinrichtung oder Abfördereinrichtung übergeben werden kann. Die wenigstens eine Abführeinrichtung oder Abfördereinrichtung kann als Rohr und/oder als Leitung und/oder dergleichen ausgebildet sein. Auch kann die Abführ- oder Abfördereinrichtung durch einen Band-, Matten- oder Kettenförderer oder durch einen sonstigen angetriebenen Förderer gebildet sein.

Sinnvollerweise kann vorgesehen sein, dass der Antriebswelle des wenigstens einen Antriebes zumindest eine Lagerungseinheit zugeordnet ist. Vorzugsweise können der Antriebswelle zumindest zwei Lagerungseinheiten zugeordnet sein, welche die Antriebswelle aufnehmen können. Die zumindest zwei Lagerungseinheiten können entlang der Längserstreckungsrichtung der Antriebswelle beabstandet zueinander angeordnet sein.

In diesem Zusammenhang kann außerdem vorgesehen sein, dass dem wenigstens einen Antrieb zumindest eine Abstützvorrichtung zugeordnet ist, welche die mindestens eine Sensorik umfasst. Die Steuerungseinheit kann über die mindestens eine Sensorik das auf die Antriebswelle des wenigstens einen Antriebs über den Zeitverlauf wirkende Drehmoment erkennen und/oder erfassen. Das auf die Antriebswelle über den Zeitverlauf wirkende Drehmoment kann anhand einer auf die Antriebswelle wirkenden Gewichtkraft bestimmt werden, welche Gewichtskraft von der mindestens einen Sensorik gemessen wird. Schließlich kann die Steuerungseinheit anhand des Drehmoments Informationen zu mittels der Vielzahl an Aufnahmeeinheiten über einen bestimmten Zeitabschnitt bewegten Massen an Gut bereitstellen.

Dies kann folgendes bedeuten: Im Betrieb des Elevators können die einzelnen Aufnahmeeinheiten mittels einer Zuführeinrichtung nacheinander mit Gut befüllt werden. Je mehr Aufnahmeeinheiten mit Gut befüllt sind, desto mehr Kraft kann auf die Antriebswelle wirken. Die auf die Antriebswelle wirkende Kraft kann über die mindestens eine Sensorik gemessen und erfasst werden. Das in den Aufnahmeeinheiten befüllte Gut kann mittels des Elevators nach oben bewegt und einer Abführeinrichtung zugeführt werden. Anhand der von der mindestens einen Sensorik erfassten und/oder erkannten Gewichtskraft kann die Steuerungseinrichtung das jeweilige Drehmoment ableiten. Damit kann mittels der Steuerungseinrichtung bestimmt werden, wie viel Masse an Gut während des Betriebes des Elevators befördert wurde, d.h. mittels des erfindungsgemäßen Elevators kann der Durchsatz bzw. die Fördermenge an Gut bestimmt werden.

Gemäß einer Ausführungsform der Erfindung kann vorgesehen sein, dass die Antriebswelle des wenigstens einen Antriebs mit einer definierten Kraft und/oder mit einem definierten Drehmoment vorgespannt ist. Das Beaufschlagen der Antriebswelle des wenigstens einen Antriebs mit einer definierten Kraft und/oder mit einem definierten Drehmoment kann dafür sorgen, dass bei Inbetriebnahme des Elevators der wenigstens eine Antrieb nicht durch ein Nullmoment durchgeht. Das Beaufschlagen der Antriebswelle mit einer definierten Kraft kann auf der Seite des Antriebes erfolgen, indem die Antriebswelle in Drehrichtung der Umlenkstation vorgespannt ist. Die definierte Kraft kann einen Wert zwischen 800 und 1200 Newton betragen und/oder das definierte Drehmoment kann einen Wert zwischen 300 Nm und 500 Nm betragen, welche definierte Kraft und/oder welches definiertes Drehmoment zur Beaufschlagung der Antriebswelle des wenigstens einen Antriebs ausgebildet ist.

Gemäß einer Ausführungsform der Erfindung kann die mindestens eine Sensorik durch eine Messdose oder durch eine Wägezelle gebildet sein. Wahlweise kann die mindestens eine Sensorik auch durch einen Dehnungsmessstreifen oder durch ein Piezoelement ausgebildet sein. Die Auswahl der vorliegend genannten Elemente zur Ausbildung der mindestens einen Sensorik ist nicht einschränkend zu verstehen. Die mindestens eine Sensorik kann durch zahlreiche weitere Elemente gebildet sein, welche zur Gewichtskrafterfassung und/oder Drehmomenterfassung geeignet sind.

Es kann vorgesehen sein, dass der Elevator derart ausgebildet ist, dass das auf die Antriebswelle des wenigstens einen Antriebs über einen bestimmten Zeitverlauf wirkenden Drehmoment und/oder wirkende Gewichtskraft zumindest weitgehend kontinuierlich ansteigt, bis eine maximal Auslastung des Elevators erfolgt. Der Anstieg des auf die Antriebswelle wirkenden Drehmoments kann sich daraus ergeben, dass über einen bestimmten Zeitverlauf ein Teil der Vielzahl an Aufnahmeeinheiten mit Gut befüllt werden, wobei insbesondere diejenigen Aufnahmeeinheiten mit Gut befüllt werden, welche in Förderrichtung des mindestens einen umlaufenden Zugmittels vertikal nach oben bewegt werden. Das Zuführen des Guts kann mittels einer Zuführeinrichtung erfolgen, wodurch das Gut jeweils in die Aufnahmeeinheiten geleitet werden kann. Die maximale Auslastung kann dann erreicht sein, sobald sämtliche Aufnahmeeinheiten des mindestens einen umlaufend geführten Zugmittels in Förderrichtung nach oben mit Gut befüllt sind. Mit der zunehmenden Anzahl an befüllten Aufnahmeeinheiten mit Gut kann mehr Gewichtskraft auf die Antriebswelle wirken, welche Gewichtskraft von der mindestens einen Sensorik erfassbar und/oder erkennbar ist. Wahlweise kann mit einer zunehmenden Gewichtskraft ein höheres Drehmoment erforderlich sein, um eine Fördergeschwindigkeit des Elevators beizubehalten, und umgekehrt.

Es kann vorgesehen sein, dass der Elevator derart ausgebildet ist, dass das auf die Antriebswelle des wenigstens einen Antriebs über einen bestimmten Zeitverlauf wirkende Drehmoment und/oder wirkende Gewichtskraft derart ausgebildet ist, dass das Drehmoment und/oder die Gewichtskraft bei einer maximalen Auslastung des Elevators zumindest weitgehend auf einem Wert bleibt. Es kann vorgesehen sein, dass bei einer maximalen Auslastung des Elevators die auf die Antriebswelle wirkende Gewichtskraft und damit auch das auf die Antriebswelle wirkende Drehmoment zumindest weitgehend unverändert bleibt, welches über einen bestimmten Zeitverlauf aufrechterhalten werden kann.

Es kann vorgesehen sein, dass der Elevator derart ausgebildet ist, dass das auf die Antriebswelle des wenigstens einen Antriebs über einen bestimmten Zeitverlauf wirkende Drehmoment und/oder wirkende Gewichtskraft zumindest weitgehend kontinuierlich abnimmt, bis eine vollständige Entleerung des Elevators erfolgt ist. Eine vollständige Entleerung des Elevators kann dann erreicht sein, wenn das Gut von sämtlichen Aufnahmeeinheiten an die wenigstens eine Abführeinrichtung übergeben ist. Aufgrund der Abgabe des Guts an die wenigstens eine Abführeinrichtung kann die auf die Antriebswelle wirkende Gewichtskraft zumindest kontinuierlich bis zur vollständigen Entleerung abnehmen.

In der Praxis kann zudem vorgesehen sein, dass die Steuerungseinheit aus dem erfassten und/oder erkannten über den Zeitverlauf auf die Antriebswelle wirkenden Drehmoment Informationen zu einer Störung des Elevators ableiten kann. Die Praxis hat gezeigt, dass während eines fortlaufenden Betriebes des Elevators das mindestens eine umlaufend geführte Zugmittel ggf. in einen Schieflauf gerät, bei welchem das jeweilige über den Zeitverlauf festgestellte Drehmoment von einem Soll-Drehmoment abweicht bzw. ggf. in Richtung nach oben oder unten ausschlägt. Die Steuerungseinheit kann bei einem solchen Ausschlagen des Drehmomentes bzw. bei einer solchen Abweichung des über den Zeitverlauf erkannten und/oder erfassten Drehmomentes unter Vergleich mit einem jeweiligen hinsichtlich des Zeitverlaufs auszubildenden Soll-Drehmomentverlauf einen Schieflauf des mindestens einen umlaufend geführten Zugmittels erkennen bzw. feststellen.

Wie zuvor bereits erwähnt, kann das mindestens eine umlaufend geführte Zugmittel über zwei Umlenkstationen geführt sein. Sofern wenigstens eine der zwei Umlenkstationen einen Lagerschaden aufweist, zeigt sich auch hierdurch ein Ausschlag des Drehmomentes bzw. eine Abweichung des erkannten und/oder erfassten Drehmomentes über den Zeitverlauf von einem vorgegebenen Soll-Drehmomentverlauf. Die Steuerungseinheit kann sodann in der Lage sein, aus dem jeweiligen erkannten und/oder erfassten über den Zeitverlauf auf die Antriebswelle wirkenden Drehmoment Informationen zu einer Störung des Elevators abzuleiten und ggf. auszugeben. Ein solcher Ausschlag des erkannten und/oder festgestellten Drehmomentes über den Zeitverlauf bzw. ein Abweichen des erkannten und/oder festgestellten Drehmomentes von einem vorgegebenen Soll-Drehmomentverlauf kann auch vorliegen, sofern der Elevator einen Schaden an einer als Bestandteil des Elevators ausgebildeten Rücklaufsperre aufweist.

Um eine Betriebssicherheit für den Elevator zu gewährleisten, kann es sein, dass eine mit dem mindestens einen umlaufend geführten Zugmittel in Verbindung stehende Umlenkscheibe und/oder eine mit dem mindestens einen umlaufend geführten Zugmittel in Verbindung stehende Antriebsscheibe unzugänglich angeordnet sind. Sofern ein ungewollter Kontakt mit der Antriebsscheibe und/oder der Umlenkscheibe erfolgt oder sofern durch einen Benutzer und/oder einen Dritten die Antriebsscheibe und/oder die Umlenkscheibe gewollt oder ungewollt gegriffen wird, weicht hierdurch das jeweilige über den Zeitverlauf erkannte und/oder erfasste Drehmoment von einem ggf. auf der Steuerungseinheit hinterlegten Soll-Drehmomentverlauf ab. Die Steuerungseinheit kann sodann in der Lage sein, hierdurch Informationen zu einer Störung des Elevators auszugeben. Aus Sicherheitsgründen kann vorgesehen sein, dass die Steuerungseinheit bei einer solchen erkannten Störung den Elevator bzw. den wenigstens einen Antrieb des Elevators abschaltet.

Auch können sich Ausschläge im Hinblick auf das erkannte und/oder erfasste Drehmoment über den Zeitverlauf zeigen, sofern sich Fremdkörper in einzelnen Aufnahmeeinheiten befinden. Sofern dies der Fall ist, kann die Steuerungseinheit einen Benutzer ggf. über ein Display und/oder akustisch informieren. Denkbar ist hierbei, dass die Steuerungseinheit den Elevator hierbei temporär außer Betrieb nimmt. Ein Ausschlag des Drehmomentes über den Zeitverlauf bzw. ein Abweichen des erkannten und/oder erfassten Drehmomentes über den Zeitverlauf von einem vorgegebenen Soll-Drehmomentverlauf hat sich auch gezeigt, sofern Aufnahmeeinheiten verklebt bzw. zugeschmiert sind.

Der erfindungsgemäße Gegenstand sieht weiter ein Verfahren zum Fördern von Gut vor. Merkmale, welche vorhergehend bereits zu diversen Ausführungsformen des Elevators beschrieben wurden, können ebenso bei diversen Ausführungsformen des nachfolgend beschriebenen Verfahrens vorgesehen sein. Weiter können nachfolgend beschriebene Merkmale, welche diverse Ausführungsformen des Verfahrens betreffen, bei diversen Ausführungsformen des vorhergehend bereits beschriebenen Elevators vorgesehen sein.

In einem ersten Schritt wird ein Elevator mit mindestens einem umlaufend geführten Zugmittel mit einer Vielzahl daran angeordneten Aufnahmeeinheiten zum Bewegen von Gut bereitgestellt, wobei das Gut insbesondere in Förderrichtung vertikal nach oben bewegt werden kann.

In einem weiteren Schritt wird das mindestens eine umlaufend geführte Zugmittel mit einer Fördergeschwindigkeit angetrieben. Das Antreiben des mindestens einen umlaufend geführten Zugmittels kann kontinuierlich erfolgen. Die Fördergeschwindigkeit kann durch den Bediener manuell und/oder automatisch eingestellt werden.

In einem weiteren Schritt wird ein auf eine Antriebswelle des wenigstens einen Antriebs über einen Zeitverlauf wirkendes Drehmoment erfasst und/oder erkannt, wobei aus dem erfassten und/oder erkannten über den Zeitverlauf auf die Antriebswelle wirkenden Drehmoment Informationen zu mittels der Vielzahl an Aufnahmeeinheiten über einen bestimmten Zeitabschnitt bewegten Massen an Gut abgeleitet werden.

Das auf die Antriebswelle über einen Zeitverlauf wirkende Drehmoment kann über die auf die Antriebswelle wirkende Gewichtskraft bestimmt werden, welches Gewicht sensorisch und/oder mechanisch oder dergleichen erfasst werden kann. Aus dem erfassten und/oder erkannten über den Zeitverlauf auf die Antriebswelle wirkenden Drehmoment können Informationen zu mittels der Vielzahl an Aufnahmeeinheiten über einen bestimmten Zeitabschnitt bewegten Massen an Gut abgeleitet werden.

Gemäß einer Ausführungsform des Verfahrens kann vorgesehen sein, dass zur Inbetriebnahme die Antriebswelle des wenigstens einen Antriebs mit einer definierten Kraft und/oder mit einem definierten Drehmoment vorgespannt wird. Damit kann bei Inbetriebnahme des Elevators der wenigstens eine Antrieb nicht durch ein Nullmoment gehen.

Es kann vorgesehen sein, dass das auf die Antriebswelle des wenigstens einen Antriebs über einen bestimmten Zeitverlauf wirkende Drehmoment und/oder wirkende Gewichtskraft bis zum Erreichen einer maximalen Auslastung des Elevators zumindest weitgehend kontinuierlich zunimmt. Es kann vorgesehen sein, dass das Gut jeweils den Aufnahmeeinheiten zugeführt wird und jeweils von einer der Vielzahl an Aufnahmeeinheiten aufgenommen und/oder gelagert wird. Die befüllten Aufnahmeeinheiten mit Gut können in Förderrichtung des umlaufend geführten Zugmittels vertikal nach oben bewegt werden. Aufgrund der zunehmenden Anzahl an befüllten Aufnahmeeinheiten kann die auf die Antriebswelle wirkende Gewichtskraft zunehmen. Wahlweise kann durch die auf die Antriebswelle wirkende zunehmende Gewichtskraft ein höheres Drehmoment erforderlich sein, um die Fördergeschwindigkeit des umlaufend geführten Zugmittels beibehalten zu können. Die maximale Auslastung kann dann erreicht sein, sobald sämtliche Aufnahmeeinheiten des mindestens einen umlaufend geführten Zugmittels in Förderrichtung nach oben mit Gut befüllt sind.

Es kann vorgesehen sein, dass das auf die Antriebswelle des wenigstens einen Antriebs über den Zeitverlauf wirkende Drehmoment nach Erreichen einer maximalen Auslastung des Elevators zumindest weitgehend gleichbleibend verläuft. Bei einer maximalen Auslastung des Elevators kann das auf die Antriebswelle des wenigstens Antriebs wirkende Drehmoment zumindest weitgehend konstant bleiben, da die auf die Antriebswelle wirkende Gewichtskraft zumindest weitgehend unverändert bleibt.

Gemäß einer Ausführungsform des Verfahrens kann vorgesehen sein, dass das auf die Antriebswelle des wenigstens einen Antriebs über einen bestimmten Zeitverlauf wirkende Drehmoment bis zum Erreichen einer vollständigen Entleerung des Elevators zumindest weitgehend kontinuierlich abnimmt. Die einzelnen Aufnahmeeinheiten können jeweils das vertikal nach oben bewegte Gut an eine Abführeinrichtung abgeben, wobei die leeren Aufnahmeeinheiten anschließend vertikal nach unten bewegt werden. Eine vollständige Entleerung des Elevators kann dann vorgesehen sein, sobald sämtliche Aufnahmeeinheiten das bewegte Gut an die Abführeinrichtung abgegeben haben. Es kann vorgesehen sein, dass das auf die Antriebswelle wirkende Gewicht durch das Entleeren der Aufnahmeeinheiten zumindest weitgehend abnimmt, wodurch auch das auf die Antriebswelle wirkende Drehmoment zumindest weitgehend abnimmt. Die vollständige Entleerung kann nur dann erreicht werden, wenn die Aufnahmeeinheiten zugleich nicht mehr mit Gut befüllt werden.

Es kann vorgesehen sein, dass der Zeitverlauf bis zum Erreichen der maximalen Auslastung und der vollständigen Entleerung des Elevators zumindest weitgehend einem gleichen Wert entspricht. Der Zeitverlauf kann beispielsweise einen Wert zwischen 9 und 15 Sekunden betragen. Der Zeitverlauf der maximalen Auslastung des Elevators kann beispielsweise einem Wert zwischen 21 und 27 Sekunden entsprechen.

Es kann vorgesehen sein, dass der Zeitverlauf bis zur maximalen Auslastung und bis zur vollständigen Entleerung aller Aufnahmeeinheiten zumindest näherungsweise die Hälfte der Zeit vom Zeitverlauf während der maximalen Auslastung entspricht.

Weiter ist vorstellbar, dass aus dem erfassten und/oder erkannten über den Zeitverlauf auf die Antriebswelle wirkenden Drehmoment Informationen zu einer Störung des Elevators abgeleitet werden. Wie vorhergehend bereits erwähnt, kann es sein, dass das mindestens eine umlaufend geführte Zugmittel während eines fortlaufenden Betriebes des Elevators in Schieflage gerät. Hierbei kann das jeweilige über den Zeitverlauf festgestellte Drehmoment von einem Soll-Drehmomentverlauf abweichen bzw. in Richtung nach oben oder nach unten gegenüber einem Soll-Drehmomentverlauf ausschlagen. Ist dies der Fall, so kann eine Störung ausgegeben werden. Insbesondere kann es sein, dass die Störung optisch und/oder akustisch ausgegeben wird bzw. auf einem als Bestandteil einer Steuerungseinheit ausgebildetem Display dargestellt wird.

Auch ein Lagerschaden in einer Umlenkstation für das mindestens eine umlaufend geführte Zugmittel und/oder ein Schaden an einer Rücklaufsperre können, wie vorhergehend bereits beschrieben, hierdurch ggf. erkannt bzw. festgestellt und als Störung ausgegeben werden.

Um die Betriebssicherheit zu erhöhen, kann es sein, dass eine mit dem mindestens einen umlaufend geführten Zugmittel in Verbindung stehende Umlenkscheibe und/oder Antriebsscheibe sich rotierend bewegt und ein gewolltes oder ungewolltes Angreifen durch einen Benutzer an der Umlenkscheibe und/oder Antriebsscheibe erkannt bzw. festgestellt wird. Bei einem gewollten oder ungewollten Angreifen an der Umlenkscheibe und/oder Antriebsscheibe schlägt das über den Zeitverlauf festgestellte bzw. erkannte Drehmoment aus und weicht von einem vorgegebenen Soll-Drehmomentverlauf ab. Insbesondere haben sich Ausführungsformen bewährt, bei welchen bei einem erkannten bzw. festgestellten gewollten oder ungewollten Angreifen eines Benutzers an der Umlenkscheibe und/oder Antriebsscheibe der Elevator bzw. der mindestens eine Antrieb zumindest temporär angehalten bzw. abgeschalten wird.

Weiter ist denkbar, dass sich Fremdkörper in einzelnen Aufnahmeeinheiten befinden und/oder dass einzelne Aufnahmeeinheiten verklebt bzw. zugeschmiert sind. Da eine Masse dieser Aufnahmeeinheiten gegenüber einer Masse bei alleiniger Befüllung mit Gut abweicht, wirkt sich dies auf das jeweilige erkannte und/oder erfasste Drehmoment über den Zeitverlauf aus, wobei das jeweilige erkannte und/oder erfasste Drehmoment über den Zeitverlauf von einem Soll-Drehmomentverlauf abweicht. Sofern dies der Falls ist, können weiterhin Informationen zu einer Störung vorzugsweise akustisch und/oder optisch ausgegeben werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A, 1B und 1C zeigen den Elevator in unterschiedlichen Perspektiven und Ansichten.
Fig. 2 verdeutlicht einzelne Schritte zur Umsetzung des Verfahrens zum Fördern von Gut.
Fig. 3 zeigt das Verhältnis zwischen Zeit und das über einen Zeitverlauf auf die Antriebswelle wirkende Gewichtskraft und Förderleistung in einem schematischen Schaubild.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

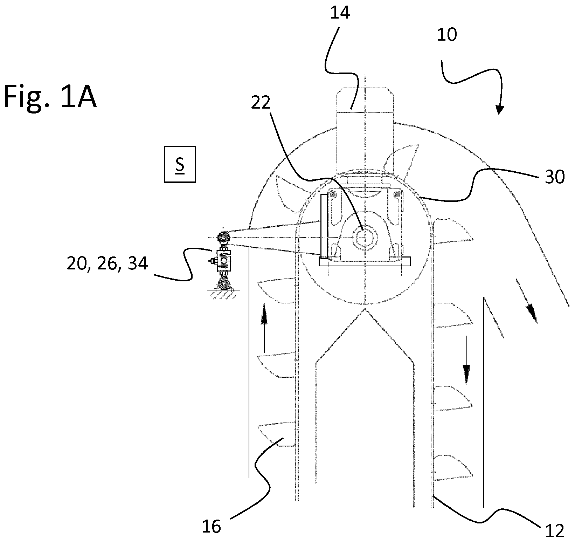

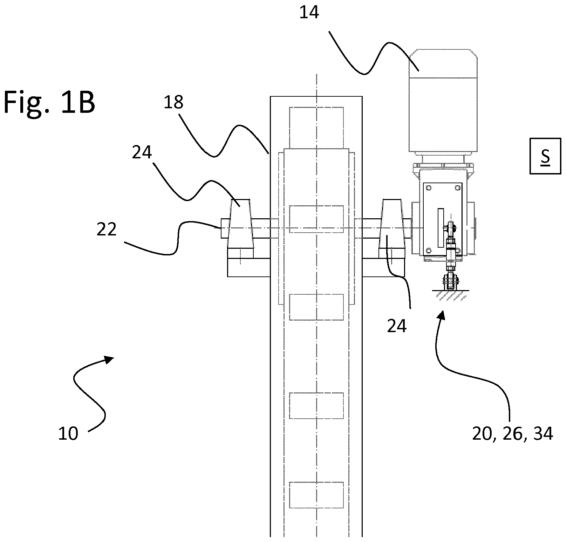

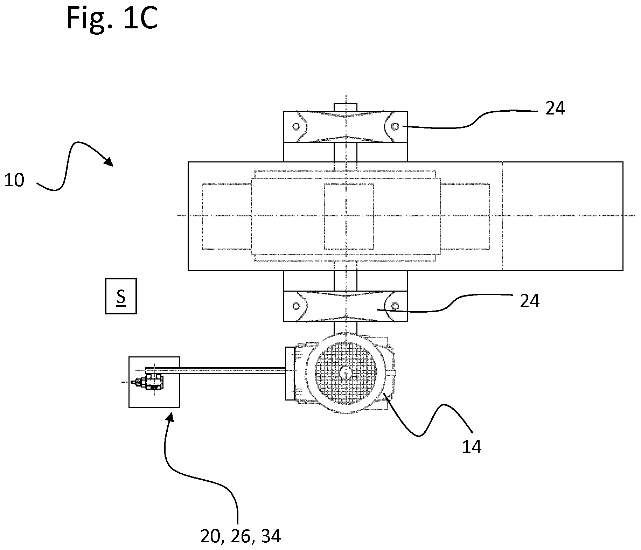

Die Figuren 1A bis 1C zeigen anhand mehrerer schematischer Zeichnungen eine Ausführungsvariante eines erfindungsgemäßen Elevators 10 zum Fördern von Gut entlang einer vertikalen Ebene. Der Elevator 10 umfasst ein Gehäuse 18, innerhalb welches Gehäuses 18 mindestens ein umlaufend geführtes Zugmittel 12 angeordnet ist. Das Zugmittel 12 ist durch ein Förderband ausgebildet. Das Zugmittel 12 ist um zumindest zwei Umlenkstationen geführt, wobei in den Figuren 1 jeweils nur eine Umlenkstation 30 dargestellt ist. Die zumindest zwei Umlenkstationen sind vorliegend als Rollen ausgebildet. Zumindest einer der zwei Umlenkstationen ist wenigstens ein Antrieb 14 zugeordnet, welche Umlenkstation 30 damit als Antriebsrolle ausgebildet ist. Der wenigstens eine Antrieb 14 ist als Motor ausgebildet und umfasst eine Antriebswelle 22, welche Antriebswelle 22 in eine von der Umlenkstation 30 bereitgestellten Aufnahme zumindest teilweise aufgenommen wird. Der Antriebswelle 22 sind zumindest zwei Lagerungseinheiten 24 zugeordnet, welche jeweils entlang der Längserstreckungsrichtung der Antriebswelle 22 zueinander beabstandet angeordnet sind. Vorzugsweise befinden sich die wenigstens zwei Lagerungseinheiten 24 zumindest näherungsweise an den Enden der Antriebswelle 22. Der wenigstens eine Antrieb 14 und die zumindest zwei Lagerungseinheiten 24 sind außerhalb des Gehäuses 18 des Elevators 10 angeordnet.

Am umlaufend geführten Zugmittel 12 ist eine Vielzahl an Aufnahmeeinheiten 16 vorgesehen, welche zum Bewegen von Gut mechanisch an das umlaufend angetriebene Zugmittel 12 gekoppelt sind. Die Aufnahmeeinheiten 16 sind zumindest näherungsweise gleichmäßig entlang des Umfangsverlaufes des mindestens einen Zugmittels 12 zueinander beabstandet angeordnet. Die Aufnahmeeinheiten 16 sind als Schaufeln ausgebildet, welche Gut für die vertikale Förderung aufnehmen können.

Der Elevator 10 umfasst eine Steuerungseinheit S, welche als Computer und/oder als Rechnereinheit ausgebildet ist. Die Steuerungseinheit S steht mit mindestens einer Sensorik 20 in Verbindung, so dass die Steuerungseinheit S über die mindestens eine Sensorik 20 ein auf die Antriebswelle 22 des wenigstens einen Antriebs 14 über den Zeitverlauf wirkendes Drehmoment erfasst und/oder erkennt. Aus dem erfassten und/oder erkannten über den Zeitverlauf auf die Antriebwelle 22 wirkenden Drehmoment leitet die Steuerungseinheit S Informationen zu mittels der Vielzahl an Aufnahmeeinheiten 16 bewegten Massen an Gut ab. Es sind damit die Informationen ableitbar, wie viele Massen an Gut je Aufnahmeeinheit und/oder je Förderperiode bewegt werden.

Auch ist die Steuerungseinheit S dazu ausgebildet, ein über den Zeitverlauf mittels der Sensorik 20 erkanntes und/oder erfasstes Drehmomente mit einem Soll-Drehmomentverlauf zu vergleichen. Sofern das mittels der Sensorik erkannte und/oder erfasste Drehmoment von einem Soll-Drehmomentverlauf abweicht, kann die Steuerungseinheit S einen Benutzer über eine Störung des Elevators 10 informieren. Denkbar ist hierbei, dass die Steuerungseinheit S den Elevator 10 zumindest temporär abschaltet.

Dem wenigstens einen Antrieb 14 ist zumindest eine Abstützvorrichtung 26 zugeordnet, welche Abstützvorrichtung 26 die mindestens eine Sensorik 20 umfasst. Die mindestens eine Sensorik 20 erfasst und/oder erkennt das auf die Antriebswelle 22 des wenigstens einen Antriebs 14 über den Zeitverlauf wirkende Drehmoment, welches Drehmoment anhand der auf die Antriebswelle wirkenden Gewichtskraft abgeleitet wird. Die auf die Antriebswelle 22 des wenigstens einen Antriebs 14 wirkende Gewichtskraft wird von der mindestens einen Sensorik 20 erfasst. Die Sensorik 20 ist in den vorliegenden Figuren 1 als Wägezelle 34 ausgebildet, mittels welcher die auf die Antriebswelle 22 über den Zeitverlauf wirkende Gewichtskraft erfasst wird.

Die auf die Antriebswelle 22 über den Zeitverlauf wirkende Gewichtskraft steht in Abhängigkeit von der Anzahl und Menge an befüllten Aufnahmeeinheiten 16 mit Gut, wobei auf die Antriebswelle 22 mehr Gewichtskraft wirkt, je mehr Aufnahmeeinheiten 16 mit Gut befüllt sind, und wobei auf die Antriebswelle 22 weniger Gewichtskraft wirkt, je weniger Aufnahmeeinheiten 16 mit Gut befüllt sind. Auf Basis der von der mindestens einen Sensorik 20 erfassten und/oder erkannten auf die Antriebswelle 22 wirkenden Gewichtskraft kann auf das Drehmoment geschlossen werden. Daraus ergibt sich, dass das Drehmoment bei einer auf die Antriebswelle 22 wirkenden zunehmenden Gewichtskraft zu erhöhen und/oder bei einer auf die Antriebswelle 22 wirkenden abnehmenden Gewichtskraft zu reduzieren ist, um die Förderleistung und Fördergeschwindigkeit des Elevators 10 beibehalten zu können. Aus dem erfassten und/oder erkannten über den Zeitverlauf auf die Antriebwelle 22 wirkenden Drehmoment leitet die Steuerungseinheit S Informationen zu mittels der Vielzahl an Aufnahmeeinheiten 16 bewegten Massen an Gut ab. Damit können Rückschlüsse gewonnen werden, wie viele Massen an Gut pro Aufnahmeeinheit 16 und/oder pro Förderperiode gewonnen wurden.

Die Antriebswelle 22 des wenigstens einen Antriebs 14 zeichnet sich dadurch aus, dass diese durch eine definierte Kraft und/oder durch ein definiertes Drehmoment vorgespannt ist, so dass der wenigstens eine Antrieb 14 bei Inbetriebnahme des Elevators 10 nicht durch das Nullmoment durchgehen muss.

Der Elevator 10 umfasst mindestens eine hier nicht dargestellte Zuführeinrichtung und mindestens eine hier nicht dargestellte Abführeinrichtung. Die mindestens eine

Zuführeinrichtung ist im unteren Bereich des Elevators 10, insbesondere des umlaufend geführten Zugmittels 12, angeordnet, mittels welcher jeweils der Vielzahl an Aufnahmeeinheiten 16 Gut zugeführt werden kann. Die mindestens eine Abführeinrichtung ist im oberen Bereich des Elevators 10, insbesondere des umlaufend geführten Zugmittels 12, angeordnet. Die mindestens eine Zuführeinrichtung und die mindestens eine Abführeinrichtung sind als Leitung ausgebildet.

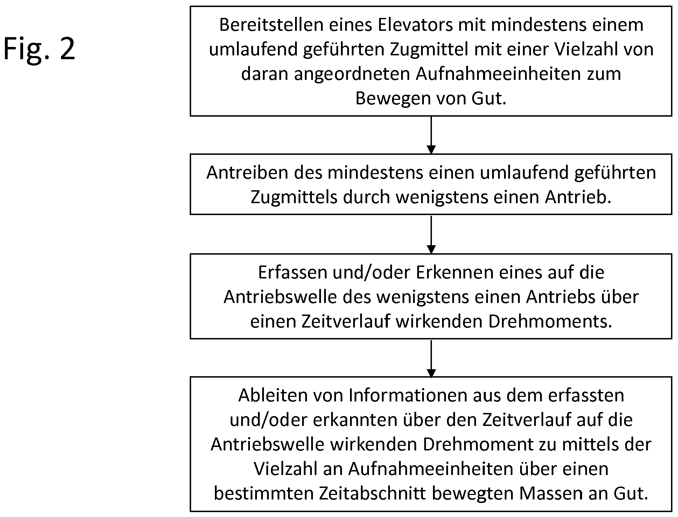

Die Fig. 2 zeigt die einzelnen Schritte des Verfahrens zum Fördern von Gut in einem Flussdiagramm. Das Verfahren sieht vor, dass ein Elevator 10 mit mindestens einem umlaufend geführten Zugmittel 12 mit einer Vielzahl daran angeordneten Aufnahmeeinheiten 16 zum Bewegen von Gut bereitgestellt wird, wobei das Gut insbesondere in Förderrichtung vertikal nach oben bewegt werden kann.

Anschließend wird das mindestens eine umlaufend geführte Zugmittel 12 mit einer definierten Fördergeschwindigkeit angetrieben, wobei die definierte Fördergeschwindigkeit während des Verfahrens zum Fördern von Gut zumindest weitgehend kontinuierlich beibehalten wird. Zum Antreiben dient wenigstens ein Antrieb 14, welcher eine Antriebswelle 22 umfasst.

Das Verfahren sieht weiter vor, dass eines auf eine Antriebswelle 22 des wenigstens einen Antriebs 14 über einen Zeitverlauf wirkendenden Drehmoments erfasst und/oder erkannt wird, wobei aus dem erfassten und/oder erkannten über den Zeitverlauf auf die Antriebswelle 22 wirkenden Drehmoment Informationen zu mittels der Vielzahl an Aufnahmeeinheiten 16 über einen bestimmten Zeitabschnitt bewegten Massen an Gut abgeleitet werden.

Das auf die Antriebswelle 22 des wenigstens einen Antriebs 14 über einen Zeit wirkende Drehmoment wird über die auf die Antriebswelle 22 wirkende Gewichtskraft bestimmt. Die auf die Antriebswelle 22 wirkende Gewichtskraft wird sensorisch und/oder mechanisch oder dergleichen erfasst. Aus dem erfassten und/oder erkannten über den Zeitverlauf auf die Antriebswelle 22 wirkenden Drehmoment können die vom Elevator 10 bewegten Massen an Gut bestimmt werden.

Zur Durchführung des Verfahrens ist die Antriebswelle 22 des wenigstens einen Antriebs 14 mit einer definierten Kraft und/oder mit einem definierten Drehmoment vorgespannt. Die definierte Kraft kann beispielsweise einen Wert zwischen 800 und 1200 Newton betragen und/oder das definierte Drehmoment kann beispielsweise einen Wert zwischen 300 Nm und 500 Nm betragen.

Das auf die Antriebswelle 22 des wenigstens einen Antriebs 14 wirkende Gewichtskraft und damit auch das Drehmoment verändern sich während des Verfahrens. Das auf die Antriebswelle 22 des wenigstens einen Antriebs 14 über einen bestimmten Zeitverlauf wirkenden Drehmoments nimmt bis zum Erreichen einer maximalen Auslastung des Elevators 10 zumindest weitgehend kontinuierlich zu. Dies ist darauf zurückführbar, dass dem Elevator 10, insbesondere den einzelnen Aufnahmeeinheiten 16 jeweils Gut zugeführt wird und von diesen aufgenommen wird. Die befüllten Aufnahmeeinheiten 16 werden in Förderrichtung des umlaufend geführten Zugmittels 12 vertikal nach oben bewegt, wodurch aufgrund der steigenden Anzahl an befüllten Aufnahmeeinheiten 16 mehr Gewicht auf die Antriebswelle 22 des wenigstens einen Antriebs 14 wirkt. Die maximale Auslastung des Elevators 10 wird erreicht, wenn diejenigen Aufnahmeeinheiten 16 mit Gut befüllt sind, welche in Förderrichtung des mindestens einen umlaufend geführten Zugmittels 12 nach vertikal nach oben bewegt werden.

Bei Erreichen der maximalen Auslastung des Elevators 10 bleibt die auf die Antriebswelle 22 des wenigstens einen Antriebs 14 wirkende Gewichtskraft und damit auch das Drehmoment zumindest weitgehend gleich.

Die auf die Antriebswelle 22 des wenigstens einen Antriebs 14 wirkende Gewichtskraft nimmt zumindest weitgehend kontinuierlich bis zu einer vollständigen Entleerung des Elevators 10, insbesondere sämtlicher Aufnahmeeinheiten 16, ab, indem das Gut der Aufnahmeeinheiten 16 nacheinander an die mindestens eine Abführeinrichtung abgegeben wird. Die Zeit bis zum Erreichen der maximalen Auslastung der vollständigen Entleerung des Elevators 10 entspricht beispielsweise einem Wert zwischen 9 und 15 Sekunden.

Über die auf die Antriebswelle 22 des wenigstens einen Antriebs 14 wirkende Gewichtskraft wird das entsprechende Drehmoment sowie anschließend aus dem Drehmoment Informationen zu mittels der Vielzahl an Aufnahmeeinheiten über einen bestimmten Zeitabschnitt bewegten Massen an Gut abgeleitet.

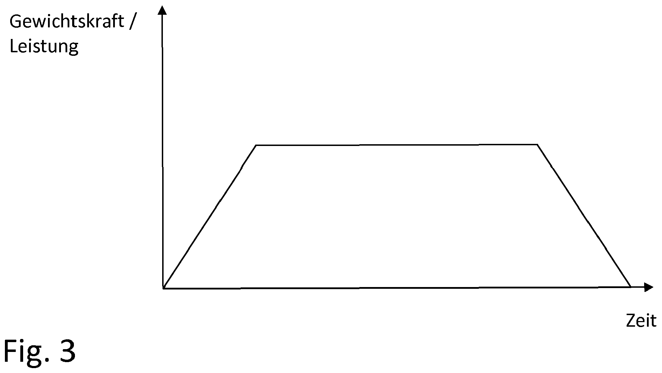

Die Fig. 3 zeigt in einer schematischen Ansicht das Verhältnis zwischen Zeit und das auf Antriebswelle über den Zeitverlauf wirkende Gewichtskraft und/oder die Förderleistung, wobei deutlich wird, dass sich sowohl die Gewichtskraft als auch die Förderleistung über die Zeit verändert. Anhand Fig. 3 wird deutlich, dass die auf die Antriebswelle 22 des wenigstens einen Antriebs 14 über einen bestimmten Zeitverlauf wirkende Gewichtskraft zumindest weitgehend kontinuierlich ansteigt, bis eine maximale Auslastung des Elevators 10 erfolgt. Aufgrund des Anstiegs der Gewichtskraft steigt auch das Drehmoment, um die Fördergeschwindigkeit des Elevators 10 zumindest weitgehend konstant zu halten. Der zumindest weitgehend kontinuierliche Anstieg des Drehmoments ergibt sich daraus, dass nach Inbetriebnahme des Elevators 10 über einen bestimmten Zeitverlauf ein Teil der Vielzahl an Aufnahmeeinheiten 16 mit Gut befüllt werden, welche Aufnahmeeinheiten 16 in Förderrichtung des mindestens einen umlaufend geführten Zugmittels 12 vertikal nach oben bewegt werden. Mit der zunehmenden Anzahl an mit Gut befüllten Aufnahmeeinheiten 16 wirkt mehr Gewichtskraft auf die Antriebswelle 22. Um die Fördergeschwindigkeit beizubehalten, wird in Abhängigkeit von der Gewichtskraft das Drehmoment eingestellt.

Die maximale Auslastung des Elevators 10 ist erreicht, sobald sämtliche Aufnahmeeinheiten 16 mit Gut befüllt sind, welche Aufnahmeeinheiten 16 in Förderrichtung des mindestens einen umlaufend geführtes Zugmittel 12 vertikal nach oben bewegt werden. Während der maximalen Auslastung des Elevators 10 bleibt die auf die Antriebswelle 22 des wenigstens einen Antriebs 14 wirkende Gewichtskraft zumindest weitgehend konstant. Damit wird auch das auf die Antriebswelle 22 des wenigstens einen Antriebs 14 wirkende Drehmoment zumindest weitgehend konstant gehalten.

Über einen bestimmten Zeitverlauf nimmt die auf die Antriebswelle 22 des wenigstens einen Antriebs 14 wirkende Gewichtskraft zumindest weitgehend kontinuierlich ab, bis sämtliche Aufnahmeeinheiten 16 geleert sind.

Zu jedem Zeitpunkt bestimmt die Steuerungseinrichtung S anhand der auf die Antriebswelle 22 wirkende Gewichtskraft das jeweilige Drehmoment und leitet aus den erfassten und/oder erkannten über den Zeitverlauf auf die Antriebwelle 22 wirkenden Drehmoment Informationen zu mittels der Vielzahl an Aufnahmeeinheiten 16 bewegten Massen an Gut ab.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Elevator
- 12: Zugmittel
- 14: Antrieb
- 16: Aufnahmeeinheiten
- 18: Gehäuse
- 20: Sensorik
- 22: Antriebswelle
- 24: Lagerungseinheit
- 26: Abstützvorrichtung
- 30: Umlenkstation
- 34: Wägezelle

- S: Steuerungseinheit

## Patentansprüche

1. Elevator (10) zum Fördern von Gut, umfassend
- mindestens ein umlaufend geführtes Zugmittel (12),
- wenigstens einen Antrieb (14), über welchen das Zugmittel (12) umlaufend bewegt werden kann,
- eine Vielzahl an Aufnahmeeinheiten (16) für Gut, welche zum Bewegen von Gut mechanisch an das umlaufend angetriebene Zugmittel (12) gekoppelt sind und
- eine Steuerungseinheit (S), die mit mindestens einer Sensorik (20) in Verbindung steht, wobei
die Steuerungseinheit (S) über die mindestens eine Sensorik (20) zum Erfassen und/oder Erkennen eines auf eine Antriebswelle (22) des wenigstens einen Antriebs (14) über den Zeitverlauf wirkenden Drehmomentes ausgebildet ist,
und wobei die Steuerungseinheit (S) aus dem erfassten und/oder erkannten über den Zeitverlauf auf die Antriebswelle (22) wirkenden Drehmoment Informationen zu mittels der Vielzahl an Aufnahmeeinheiten (16) über einen bestimmten Zeitabschnitt bewegten Massen an Gut ableiten kann,
**dadurch gekennzeichnet, dass**
- der Antriebswelle (22) des wenigstens einen Antriebs (14) zumindest eine Lagerungseinheit (24) zugeordnet ist, und wobei
- dem wenigstens einem Antrieb (14) zumindest eine Abstützvorrichtung (26) zugeordnet ist, welche zumindest eine Abstützvorrichtung (26) die Sensorik (20) umfasst.

2. Elevator nach Anspruch 1, wobei das auf die Antriebswelle (22) des wenigstens einen Antriebs (14) über den Zeitverlauf wirkende Drehmoment anhand einer auf die Antriebswelle (22) wirkenden Gewichtskraft ableitbar ist, welche Gewichtskraft von der mindestens einen Sensorik (20) erfasst und/oder erkannt wird.

3. Elevator nach Anspruch 1 oder 2, wobei der Antriebswelle (22) des wenigstens einen Antriebs (14) zumindest zwei Lagerungseinheiten (24) zugeordnet sind, welche die Antriebswelle (22) aufnehmen können.

4. Elevator nach Anspruch 3, wobei
die zumindest zwei Lagerungseinheiten (24) entlang der Längserstreckungsrichtung der Antriebswelle (22) beabstandet zueinander angeordnet sind.

5. Elevator nach einem der vorherigen Ansprüche, wobei die Antriebswelle (22) des wenigstens einen Antriebs (14) mit einer definierten Kraft und/oder einem definierten Drehmoment vorgespannt ist.

6. Elevator nach einem der vorherigen Ansprüche, wobei die Sensorik (20) durch eine Messdose und/oder durch eine Wägezelle (34) ausgebildet ist.

7. Elevator nach einem der vorherigen Ansprüche, welcher derart ausgebildet ist, dass das/die auf die Antriebswelle (22) des wenigstens einen Antriebs (14) über einen bestimmten Zeitabschnitt wirkende Drehmoment und/oder wirkende Gewichtskraft zumindest weitgehend kontinuierlich zunimmt, bis eine maximale Auslastung des Elevators (10) erfolgt.

8. Elevator nach einem der vorherigen Ansprüche, welcher derart ausgebildet ist, dass das/die auf die Antriebswelle (22) des wenigstens einen Antriebs (14) über einen bestimmten Zeitabschnitt wirkende Drehmoment und/oder wirkende Gewichtskraft derart ausgebildet ist, dass das Drehmoment und/oder Gewichtskraft bei einer maximalen Auslastung des Elevators (10) zumindest weitgehend auf einem Wert bleibt.

9. Elevator nach einem der vorherigen Ansprüche, welcher derart ausgebildet ist, dass das/die auf die Antriebswelle (22) des wenigstens einen Antriebs (14) über einen bestimmten Zeitabschnitt wirkende Drehmoment und/oder wirkende Gewichtskraft zumindest weitgehend kontinuierlich abnimmt, bis eine vollständige Entleerung des Elevators (10) erfolgt.

10. Elevator nach einem der Ansprüche 1 bis 9, bei welchem die Steuerungseinheit (S) aus dem erfassten und/oder erkannten über den Zeitverlauf auf die Antriebswelle (22) wirkenden Drehmoment Informationen zu einer Störung des Elevators (10) ableiten kann.

11. Verfahren zum Fördern von Gut, umfassend folgende Schritte:
- Bereitstellen eines Elevators (10) mit mindestens einem umlaufend geführten Zugmittel (12) mit einer Vielzahl daran angeordneten Aufnahmeeinheiten (16) zum Bewegen von Gut,
- Verbinden einer Steuerungseinheit (S) mit mindestens einer Sensorik (20),
- Antreiben des mindestens einen umlaufend geführten Zugmittels (12) durch wenigstens einen Antrieb (14),
- Erfassen und/oder Erkennen eines auf eine Antriebswelle (22) des wenigstens einen Antriebs (14) über einen Zeitverlauf wirkenden Drehmoments durch die Steuerungseinheit (S) über die mindestens eine Sensorik (20),
- Ableiten von Informationen durch die Steuerungseinheit (S) aus dem erfassten und/oder erkannten über den Zeitverlauf auf die Antriebswelle (22) wirkenden Drehmoment zu mittels der Vielzahl an Aufnahmeeinheiten (16) über einen bestimmten Zeitabschnitt bewegten Massen an Gut,
**dadurch gekennzeichnet, dass**
- der Antriebswelle (22) des wenigstens einen Antriebs (14) zumindest eine Lagerungseinheit (24) zugeordnet ist, und wobei
- dem wenigstens einem Antrieb (14) zumindest eine Abstützvorrichtung (26) zugeordnet ist, welche zumindest eine Abstützvorrichtung (26) die Sensorik (20) umfasst.

12. Verfahren nach Anspruch 11, bei dem das auf die Antriebswelle wirkende Drehmoment anhand einer auf die Antriebswelle wirkende Gewichtskraft abgeleitet werden kann, wobei die Gewichtskraft sensorisch und/oder mechanisch erfasst und/oder erkannt wird, und/oder wobei die Antriebswelle (22) des wenigstens einen Antriebs (14) mit einer definierten Kraft und/oder einem definierten Drehmoment vorgespannt wird.

13. Verfahren nach Anspruch 11 oder 12, bei dem das auf die Antriebswelle (22) des wenigstens einen Antriebs (14) über den Zeitverlauf wirkende Drehmoment und/oder wirkende Gewichtskraft bis zum Erreichen einer maximalen Auslastung des Elevators (10) zumindest weitgehend kontinuierlich zunimmt, und/oder wobei das auf die Antriebswelle (22) des wenigstens einen Antriebs (14) über den Zeitverlauf wirkende Drehmoment und/oder wirkende Gewichtskraft nach Erreichen einer maximalen Auslastung des Elevators (10) zumindest weitgehend gleichbleibend verläuft.

14. Verfahren nach einem der Ansprüche 11 bis 13, wobei das auf die Antriebswelle (22) des wenigstens einen Antriebs (14) über den Zeitverlauf wirkende Drehmoment und/oder wirkende Gewichtskraft bis zum Erreichen einer vollständigen Entleerung des Elevators (10) zumindest weitgehend kontinuierlich abnimmt, und/oder wobei der Zeitverlauf bis zum Erreichen der maximalen Auslastung und der vollständigen Entleerung des Elevators (10) zumindest weitgehend einem gleichen Wert entspricht.

15. Verfahren nach einem der Ansprüche 11 bis 14, bei dem aus dem erfassten und/oder erkannten über den Zeitverlauf auf die Antriebswelle (22) wirkenden Drehmoment Informationen zu einer Störung des Elevators (10) abgeleitet werden.

## Claims

1. An elevator (10) for conveying of goods, comprising
- at least one circumferentially guided traction means (12),
- at least one drive (14) via which the traction means (12) can be moved in a circumferential manner,
- a plurality of receiving units (16) for goods, which receiving units are mechanically coupled to the circumferentially guided traction means (12) for moving goods and
- a control unit (S) connected to at least one sensor system (20), wherein
the control unit (S), via the at least one sensor system (20), is configured for detecting and/or recognizing a torque acting on a drive shaft (22) of the at least one drive (14) over the course of time, and wherein the control unit (S) is capable of deriving information pertaining to masses of goods, which are moved by means of the plurality of receiving units (16) over a certain period of time, from the detected and/or recognized torque acting on the drive shaft (22) over the course of time,,
**characterized in that**
- at least one bearing unit (24) is assigned to the drive shaft (22) of the at least one drive (14), and wherein
- at least one support device (26) is assigned to the at least one drive (14), which at least one support device (26) comprises the sensor system (20).

2. An elevator according to claim 1, wherein the torque, acting on the drive shaft (22) of the at least one drive (14) over the course of time, can be derived based on a force of weight acting on the drive shaft (22), which force of weight is detected and/or recognized by the at least one sensor system (20).

3. An elevator according to claim 1 or 2, wherein at least two bearing units (24) are assigned to the drive shaft (22) of the at least one drive (14), which bearing units can receive the drive shaft (22).

4. An elevator according to claim 3, wherein
the at least two bearing units (24) are arranged at a distance from one another along the longitudinal extension direction of the drive shaft (22).

5. An elevator according to any of the preceding claims, wherein the drive shaft (22) of the at least one drive (14) is biased with a defined force and/or a defined torque.

6. An elevator according to any of the preceding claims, wherein the sensor system (20) is formed by a load cell and/or by a weighing cell (34).

7. An elevator according to any of the preceding claims, which elevator is configured such that the torque and/or the force of weight, acting on the drive shaft (22) of the at least one drive (14) over a certain period of time, increases at least largely continuously until a maximum load of the elevator (10) takes place.

8. An elevator according to any of the preceding claims, which elevator is configured such that the torque and/or the force of weight, acting on the drive shaft (22) of the at least one drive (14) over a certain period of time, is configured such that the torque and/or force of weight remains at least largely at one value during a maximum load of the elevator (10).

9. An elevator according to any of the preceding claims, which elevator is configured such that the torque and/or the force of weight, acting on the drive shaft (22) of the at least one drive (14) over a certain period of time, decreases at least largely continuously until the elevator (10) is completely emptied.

10. An elevator according to any of claims 1 to 9, wherein the control unit (S) is capable of deriving information pertaining to a failure of the elevator (10) from the detected and/or recognized torque acting on the drive shaft (22) over the course of time.

11. A method for conveying of goods, comprising the following steps:
- providing an elevator (10) with at least one circumferentially guided traction means (12) having a plurality of receiving units (16) arranged thereon for moving goods,
- connecting a control unit (S) to at least one sensor system (20),
- driving the at least one circumferentially guided traction means (12) by at least one drive (14),
- detecting and/or recognizing a torque, which acts on a drive shaft (22) of the at least one drive (14) over a course of time, by the control unit (S) via the at least one sensor system (20),
- deriving information, by the control unit (S), from the detected and/or recognized torque, which acts on the drive shaft (22) over the course of time, pertaining to masses of goods moved by means of the plurality of receiving units (16) over a certain period of time,
**characterized in that**
- at least one bearing unit (24) is assigned to the drive shaft (22) of the at least one drive (14), and wherein
- at least one support device (26) is assigned to the at least one drive (14), which at least one support device (26) comprises the sensor system (20).

12. A method according to claim 11, wherein the torque acting on the drive shaft can be derived based on a force of weight acting on the drive shaft, wherein the force of weight is detected and/or recognized by sensors and/or mechanically, and/or wherein the drive shaft (22) of the at least one drive (14) is biased with a defined force and/or a defined torque.

13. A method according to claim 11 or 12, wherein the torque and/or force of weight, acting on the drive shaft (22) of the at least one drive (14) over the course of time, increases at least largely continuously, until a maximum load of the elevator (10) is reached, and/or wherein the torque and/or force of weight, acting on the drive shaft (22) of the at least one drive (14) over the course of time, is at least largely constant after reaching a maximum load of the elevator (10).

14. A method according to any of claims 11 to 13, wherein the torque and/or force of weight, acting on the drive shaft (22) of the at least one drive (14) over the course of time, decreases at least largely continuously until the elevator (10) is completely emptied, and/or wherein the course of time at least largely corresponds to a same value, until the maximum load is reached and the elevator (10) is completely emptied.

15. A method according to any of claims 11 to 14, wherein information pertaining to a failure of the elevator (10) is derived from the detected and/or recognized torque acting on the drive shaft (22) over the course of time.

## Revendications

1. Ascenseur (10) pour le transport de marchandises, comprenant
- au moins un moyen de traction (12) guidé circonférentiellement,
- au moins un dispositif d'entraînement (14) par l'intermédiaire duquel le moyen de traction (12) peut être déplacé de manière circonférentielle,
- une pluralité d'unités de réception (16) pour des marchandises, lesquelles unités de réception sont couplées mécaniquement au moyen de traction (12) guidé circonférentiellement pour déplacer des marchandises, et
- une unité de commande (S) connectée à au moins un système de capteurs (20),
l'unité de commande (S), par l'intermédiaire de l'au moins un système de capteurs (20), étant configurée pour détecter et / ou reconnaître un couple agissant sur un arbre d'entraînement (22) de l'au moins un dispositif d'entraînement (14) au cours du temps,
et l'unité de commande (S) étant capable de dériver des informations concernant des masses de marchandises qui sont déplacées au moyen de la pluralité d'unités de réception (16) sur une certaine période de temps, à partir du couple détecté et / ou reconnu agissant sur l'arbre d'entraînement (22) au cours du temps,,
**caractérisé en ce que**
- au moins une unité de palier (24) est associée à l'arbre d'entraînement (22) de l'au moins un dispositif d'entraînement (14), et dans lequel
- au moins un dispositif de support (26) est associé à l'au moins un dispositif d'entraînement (14), l'au moins un dispositif de support (26) comprenant le système de capteurs (20).

2. Ascenseur selon la revendication 1, dans lequel le couple, agissant sur l'arbre d'entraînement (22) de l'au moins un dispositif d'entraînement (14) au cours du temps, peut être dérivé sur la base d'une force de poids agissant sur l'arbre d'entraînement (22), ladite force de poids étant détectée et / ou reconnue par l'au moins un système de capteurs (20).

3. Ascenseur selon la revendication 1 ou 2, dans lequel au moins deux unités de palier (24) sont associées à l'arbre d'entraînement (22) de l'au moins un dispositif d'entraînement (14), lesquelles unités de support peuvent recevoir l'arbre d'entraînement (22).

4. Ascenseur selon la revendication 3, dans lequel
les au moins deux unités de palier (24) sont disposées à une certaine distance l'une de l'autre le long de la direction d'extension longitudinale de l'arbre d'entraînement (22).

5. Ascenseur selon l'une quelconque des revendications précédentes, dans lequel l'arbre d'entraînement (22) de l'au moins un dispositif d'entraînement (14) est sollicité avec une force définie et / ou un couple défini.

6. Ascenseur selon l'une quelconque des revendications précédentes, dans lequel le système de capteurs (20) est formé par une cellule de charge et / ou par une cellule de pesage (34).

7. Ascenseur selon l'une quelconque des revendications précédentes, lequel ascenseur est configuré de telle sorte que le couple et / ou la force de poids, agissant sur l'arbre d'entraînement (22) de l'au moins un dispositif d'entraînement (14) sur une certaine période de temps, augmente au moins largement en continu jusqu'à ce qu'une charge maximale de l'ascenseur (10) ait lieu.

8. Ascenseur selon l'une quelconque des revendications précédentes, lequel ascenseur est configuré de telle sorte que le couple et / ou la force de poids, agissant sur l'arbre d'entraînement (22) de l'au moins un dispositif d'entraînement (14) sur une certaine période de temps, est configuré de telle sorte que le couple et / ou la force de poids restent au moins largement à une valeur pendant une charge maximale de l'ascenseur (10).

9. Ascenseur selon l'une quelconque des revendications précédentes, lequel ascenseur est configuré de telle sorte que le couple et / ou la force de poids, agissant sur l'arbre d'entraînement (22) de l'au moins un dispositif d'entraînement (14) sur une certaine période de temps, augmente au moins largement en continu jusqu'à ce que l'ascenseur (10) soit complètement vidé.

10. Ascenseur selon l'une quelconque des revendications 1 à 9, dans lequel l'unité de commande (S) est capable de dériver des informations concernant une défaillance de l'ascenseur (10) à partir du couple détecté et / ou reconnu agissant sur l'arbre d'entraînement (22) au cours du temps.

11. Procédé de transport de marchandises, comprenant les étapes suivantes
- la fourniture d'un ascenseur (10) avec au moins un moyen de traction guidé circonférentiellement
(12) ayant une pluralité d'unités de réception (16) agencées sur celui-ci pour déplacer des marchandises,
- la connexion d'une unité de commande (S) à au moins un système de capteurs (20),
- l'entraînement de l'au moins un moyen de traction guidés circonférentiellement (12) par au moins un dispositif d'entraînement (14),
la détection et / ou la reconnaissance d'un couple agissant sur un arbre d'entraînement (22) de l'au moins un dispositif d'entraînement (14) au cours du temps, par l'unité de commande (S) par l'intermédiaire de l'au moins un système de capteurs (20), ,
la dérivation d'informations, par l'unité de commande (S), à partir du couple détecté et / ou reconnu agissant sur l'arbre d'entraînement (22) au cours du temps, par rapport à des masses de marchandises déplacées au moyen de la pluralité d'unités de réception (16) sur une certaine période de temps, **caractérisé en ce que**
- au moins une unité de palier (24) est associée à l'arbre d'entraînement (22) de l'au moins un dispositif d'entraînement (14), et dans lequel
- au moins un dispositif de support (26) est associé à l'au moins un dispositif d'entraînement (14), l'au moins un dispositif de support (26) comprenant le système de capteurs (20).

12. Procédé selon la revendication 11, dans lequel le couple agissant sur l'arbre d'entraînement peut être dérivé sur la base d'une force de poids agissant sur l'arbre d'entraînement, la force de poids étant détectée et / ou reconnue par des capteurs et / ou de manière mécanique, et / ou l'arbre d'entraînement (22) de l'au moins un dispositif d'entraînement (14) étant sollicité avec une force définie et/ou un couple défini.

13. Procédé selon la revendication 11 ou 12, dans lequel le couple et / ou la force de poids, agissant sur l'arbre d'entraînement (22) de l'au moins un dispositif d'entraînement (14) au cours du temps, augmente au moins largement en continu, jusqu'à ce qu'une charge maximale de l'ascenseur (10) soit atteinte, et / ou dans lequel le couple et / ou la force de poids, agissant sur l'arbre d'entraînement (22) de l'au moins un entraînement (14) au cours du temps, est au moins largement constant après avoir atteint une charge maximale de l'ascenseur (10).

14. Procédé selon l'une quelconque des revendications 11 à 13, dans lequel le couple et / ou la force de poids, agissant sur l'arbre d'entraînement (22) de l'au moins un dispositif d'entraînement (14) au cours du temps, diminue au moins largement en continu jusqu'à ce que l'ascenseur (10) soit complètement vidé, et / ou dans lequel le cours du temps correspond au moins largement à une même valeur, jusqu'à ce que la charge maximale soit atteinte et que l'ascenseur (10) soit complètement vidé.

15. Ascenseur selon l'une quelconque des revendications 11 à 14, dans lequel des informations concernant une défaillance de l'ascenseur (10) sont dérivées du couple détecté et / ou reconnu agissant sur l'arbre d'entraînement (22) au cours du temps.
